(19) Europäisches Patentamt / European Patent Office / Office européen des brevets

(11) **EP 3 074 916 B1**

(12) **FASCICULE DE BREVET EUROPEEN**

(45) Date de publication et mention de la délivrance du brevet:
**26.10.2022 Bulletin 2022/43**

(21) Numéro de dépôt: **14803119.8**

(22) Date de dépôt: **26.11.2014**

(51) Classification Internationale des Brevets (IPC):
***G06K 7/10*** *(2006.01)*

(52) Classification Coopérative des Brevets (CPC):
**G06K 7/10128; G06K 7/10356**

(86) Numéro de dépôt international:
**PCT/EP2014/075665**

(87) Numéro de publication internationale:
**WO 2015/078911 (04.06.2015 Gazette 2015/22)**

(54) **SYSTÈME DE LECTURE DYNAMIQUE DE DONNÉES DE TRANSPONDEURS**

SYSTEM ZUM DYNAMISCHEN LESEN VON DATEN AUS TRANSPONDERN

SYSTEM FOR THE DYNAMIC READING OF DATA FROM TRANSPONDERS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **27.11.2013 FR 1361683**

(43) Date de publication de la demande:
**05.10.2016 Bulletin 2016/40**

(73) Titulaire: **Compagnie Générale des Etablissements Michelin**
**63000 Clermont-Ferrand (FR)**

(72) Inventeurs:
• **DESTRAVES, Julien**
  **F-63040 Clermont-Ferrand Cedex 9 (FR)**

• **URBIN-CHOFFRAY, Maxime**
  **F-63040 Clermont-Ferrand Cedex 9 (FR)**
• **VOISSIER, Pierre**
  **F-63040 Clermont-Ferrand Cedex 9 (FR)**

(74) Mandataire: **Roussy, Delphine**
**Manufacture Française des Pneumatiques Michelin**
**CBS/CORP/J/PI - F35 - Ladoux**
**23, place des Carmes-Déchaux**
**63040 Clermont-Ferrand Cedex 9 (FR)**

(56) Documents cités:
| | |
|---|---|
| **EP-A1- 2 202 099** | **EP-A2- 1 684 209** |
| **EP-A2- 1 793 326** | **WO-A1-2007/145148** |
| **JP-A- 2008 140 217** | |

## Description

### Domaine de l'invention

La présente invention est relative à un système de lecture dynamique de données inscrites dans un transpondeur d'un pneumatique, notamment pour identifier automatiquement le pneumatique lors de son passage à proximité du système.

### Etat de la technique

Le document EP 2 202 099 A1 présente un système de lecture dynamique des données d'un transpondeur à antenne à polarisation linéaire d'un pneumatique d'un véhicule. Ce système associe une antenne apte à recevoir des données transmises par le transpondeur et un lecteur couplé à l'antenne apte à lire et mémoriser les données du transpondeur. Ce système utilise une antenne à polarisation circulaire.

Ce système est notamment utilisé pour identifier automatiquement les numéros de série des pneumatiques d'un véhicule de compétition lorsque ce véhicule passe le long d'un portique placé par exemple à l'entrée du circuit. Les numéros de série des pneumatiques sont inscrits dans la mémoire de transpondeurs placés à la surface ou dans la structure des pneumatiques.

On constate cependant que ce système ne permet pas une lecture robuste des données des transpondeurs notamment à vitesse de passage élevée du véhicule le long du système.

### Description brève de l'invention

L'invention a pour objet un système de lecture dynamique des données des transpondeurs d'au moins deux pneumatiques d'un véhicule, les pneumatiques étant disposés latéralement du même côté dudit véhicule, conformément à la revendication 1.

L'utilisation d'un commutateur piloté par un contrôleur logique en fonction des signaux des détecteurs de passage de roue permet de lancer immédiatement la lecture de la première antenne dès le déclenchement d'un signal avertissant de l'entrée d'un pneumatique dans la zone de lecture efficace de la première antenne mais aussi de commuter très rapidement de la première antenne à la deuxième antenne lorsque le deuxième détecteur indique l'arrivée du pneumatique devant cette deuxième antenne. On n'est ainsi pas soumis aux variations de temps de réponse des différents lecteurs du commerce. Ce système permet aussi de garantir que les deux antennes ou plus sont bien pilotées alternativement, ce qui supprime tout risque d'interférences entre les mesures.

Chaque antenne ayant une distance efficace de lecture dans la direction de roulage du véhicule donnée, l'écartement entre deux antennes adjacentes est inférieur ou égal à la demi-somme des distances efficaces de lecture des deux antennes adjacentes.

Cela permet d'obtenir une lecture continue des données du transpondeur d'un pneumatique lorsqu'il longe une première puis une deuxième, voire une troisième antenne. Cette lecture continue a l'avantage de garantir que pour chaque révolution du pneumatique on ne sautera pas de position optimale de lecture.

Selon un mode de réalisation préférentiel, le système ayant un sens de roulage du véhicule et la première antenne ayant une distance efficace de lecture dans la direction de roulage du véhicule donnée, un premier détecteur est disposé en amont de la première antenne à une distance de l'ordre de la moitié de la distance de lecture efficace de ladite première antenne.

Cela permet de détecter l'entrée du pneumatique dans la zone efficace de lecture de la première antenne.

Avantageusement, tout détecteur disposé le long de la voie de roulage du véhicule entre deux antennes est placé à égale distance des deux antennes.

Avantageusement, le système comprend en plus un dispositif signalant la sortie d'un pneumatique de la zone de lecture du système de lecture.

Ce dispositif permet d'indiquer au système la sortie d'un pneumatique de la zone de lecture du système.

Un tel dispositif peut être un détecteur additionnel de préférence disposé en aval de la voie de roulage du véhicule à une distance de la dernière antenne inférieure ou égale à la demi-distance efficace de lecture de cette dernière antenne.

Le dispositif peut aussi être simplement un dispositif d'arrêt de la lecture de la dernière antenne le long de la piste de roulage du véhicule après un temps donné.

Avantageusement, la vitesse de commutation du commutateur pilotable est inférieure à 50 $\mu$s et de préférence inférieure à 10 $\mu$s.

Cette vitesse de commutation permet de lancer les phases de lecture d'une antenne sans délai, même lorsque la vitesse des véhicules est de l'ordre de 50 à 60 km/h.

Selon un mode de réalisation particulier, les détecteurs de passage d'un pneumatique sont des barrières optiques.

Avantageusement, les rayons de ces barrières optiques sont placés à une hauteur inférieure à trois centimètres du sol de roulage, cela leur permet de ne pas être perturbé par les carrosseries des véhicules.

De préférence, les rayons de ces barrières optiques sont placés à une hauteur comprise entre 1 et 2 centimètres du sol de roulage.

Le nombre d'antennes du système de lecture selon un objet de l'invention est de préférence inférieur à 5.

On constate en effet, que compte tenu des capacités des antennes, des lecteurs et des transpondeurs actuels, la distance efficace de lecture d'une antenne est de l'ordre de 1 à 1, 20 mètre lorsque la distance entre le transpondeur et l'antenne est aussi de l'ordre de 0,8 à 1,2 mètre. En conséquence, quatre antennes permettent une lecture sur une distance de l'ordre de 4 mètres ce qui correspond à deux révolutions d'un pneumatique de tourisme ou de compétition usuel. Cela est tout à fait suffisant pour permettre une lecture robuste des données du transpondeur des pneumatiques.

Selon un mode de réalisation préférentiel, les antennes des transpondeurs des pneumatiques étant à polarisation linéaire, les antennes du système de lecture sont des antennes à polarisation linéaire avec un champ électrique vertical. Le fait d'utiliser pour l'antenne du système une antenne à polarisation linéaire et non circulaire comme précédemment présente l'avantage de donner un gain de 3 dB pour la puissance de lecture lorsque l'antenne du système est alignée avec l'antenne du transpondeur. Le choix d'un champ électrique vertical présente aussi l'avantage de quasiment supprimer des phénomènes de réverbération des ondes contre le sol.

Il en résulte une amélioration très notable de la robustesse de lecture des données inscrites dans les transpondeurs des pneumatiques par le système.

De préférence, les antennes du système ont un gain inférieur ou égal à 6 dBi.

A titre d'exemple, en Europe, la puissance conduite aux bornes des antennes peut être inférieure ou égale à 29,15 dBm. Comme le gain des antennes sera de 6 dBi, la puissance totale rayonnée par de telles antennes est inférieure ou égale à 35,15 dB (2 W ERP), ce qui est compatible avec les normes européennes.

A titre d'exemple, aux USA, on peut utiliser des antennes avec un gain de 6 dBi et une puissance conduite maximale de 30 dBm pour respecter les normes. La puissance maximale rayonnée est ainsi de 36 dB (4 W EIRP).

Avantageusement, les transpondeurs des pneumatiques sont des RFID UHF dans la mémoire desquels sont inscrits des numéros d'identification uniques des pneumatiques.

Le système de lecture selon un objet de l'invention peut comporter en plus une unité centrale de traitement et mémorisation des données.

Avantageusement, le fonctionnement du commutateur pilotable est tel qu'il active la lecture des données du transpondeur d'un pneumatique par une antenne donnée lors du déclenchement d'un signal indiquant l'entrée du pneumatique dans la zone de lecture efficace de ladite antenne.

Le pilotage du commutateur par le contrôleur logique est ainsi très simple.

Selon un mode de réalisation préférentiel, la deuxième antenne étant activée par le commutateur pour lire les données du transpondeur d'un premier pneumatique, lors du déclenchement d'un signal indiquant l'entrée d'un nouveau pneumatique dans la zone de lecture efficace de la première antenne du système, le commutateur garde la deuxième antenne activée jusqu'au déclenchement d'un signal indiquant la sortie du premier pneumatique de la zone de lecture efficace de la deuxième antenne.

Ce mode de réalisation permet d'assurer au premier pneumatique d'un véhicule une distance de lecture des données de son transpondeur suffisante pour qu'elle soit robuste. Dès que le premier pneumatique a terminé son passage devant la deuxième antenne, le transpondeur du deuxième pneumatique du même côté du véhicule qui est devant la première antenne peut commencer à être interrogé par le lecteur via la première antenne, puis lorsque le déclencheur de la deuxième antenne envoie un signal de passage, via la deuxième antenne.

L'invention a aussi pour objet un portique de lecture dynamique de données de transpondeurs de pneumatiques de véhicules disposé le long d'une voie de roulage des véhicules, **caractérisé en ce qu'**il comporte de part et d'autre de ladite voie de roulage un système de lecture tel que précédemment décrit.

L'invention concerne particulièrement les pneumatiques destinés à équiper des véhicules à moteur de type tourisme, SUV (*"Sport Utility Vehicles"*), deux roues (notamment motos), avions, comme des véhicules industriels choisis parmi camionnettes, « Poids-lourd » - c'est-à-dire métro, bus, engins de transport routier (camions, tracteurs, remorques), véhicules hors-la-route tels qu'engins agricoles ou de génie civil -, autres véhicules de transport ou de manutention.

## Définitions

La puissance des systèmes de lecture des transpondeurs est soumise à des normes précises dans les différentes parties du monde.

La puissance rayonnée par un système lecteur + antenne correspond à la puissance totale rayonnée dans la pièce. Une antenne isotrope est utilisée comme référence de calcul, par antenne isotrope, on entend une antenne sphérique ou isotrope.

Toutes les antennes réelles sont directionnelles à des degrés divers et ainsi ont une densité de puissance supérieure dans leur direction principale comparée à une antenne (hypothétique) isotrope. Pour permettre de comparer des antennes différentes entre elles, la notion de puissance rayonnée isotrope équivalente EIRP (*equivalent isotropie radiated power*) a été introduite. Cette notion représente la puissance effective qui doit être appliquée à une antenne isotrope pour fournir la même densité de puissance dans la direction du rayon principal de l'antenne. On a :

$$EIRP = P_0 \times G_i$$

Avec : $P_0$ la puissance transmise et $G_i$ le gain de l'antenne.

La puissance rayonnée équivalente en prenant comme référence celle d'une antenne demi-onde dipôle est aussi communément utilisée « ERP » (*effective radiated power*).

On a alors :

$$ERP = P_0 + G_d = P_0 + \frac{G_i}{1,64}$$

Avec : $G_d$ le gain d'une antenne dipôle équivalente.

**Description des Figures**

Les figures annexées illustrent un portique de lecture dynamique des données de transpondeurs de véhicules dans le cas de véhicules de compétition automobile qui demandent une lecture à une vitesse rapide de l'ordre de 50 à 60 km/h :

- la figure 1 présente un exemple de transpondeur, un RFID UHF ;
- la figure 2 présente en perspective une coupe partielle de pneumatique comportant un transpondeur sur sa surface ;
- la figure 3 présente une vue schématique d'un portique avec deux systèmes de lecture de données avec deux antennes ; et
- la figure 4 précise schématiquement le fonctionnement du système de lecture de données.

**Exemples de réalisation de l'invention**

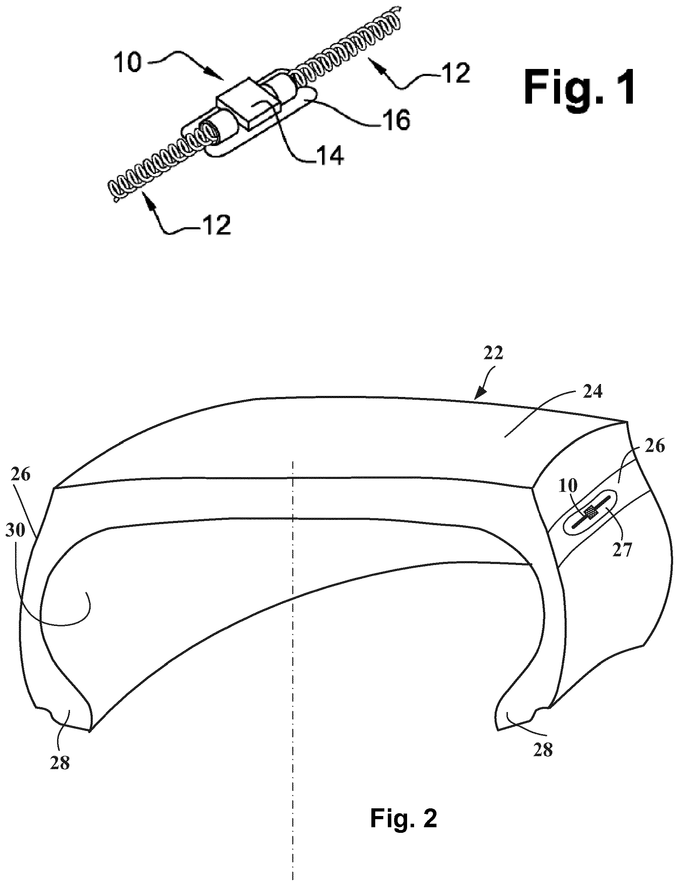

La figure 1 présente un exemple de transpondeur, un transpondeur à identification par radiofréquence passif 10 muni de deux antennes 12 formant dipôle. Ce type de transpondeur est généralement désigné par le sigle anglais RFID. Un tel transpondeur comporte, stocké dans une mémoire, un numéro d'identification unique du pneumatique. Il peut aussi comporter d'autres données relatives par exemple à la fabrication ou au type de pneumatique. Le transpondeur 10 est un RFID UHF, fonctionnant dans une gamme de fréquences de l'ordre de 850 à 950 MHz. Il comprend une puce 14 fixée sur un support 16 et connectée à deux antennes 12 de forme sensiblement hélicoïdale. Le transpondeur 10 peut être placé à l'intérieur de la structure d'un pneumatique 22 pendant la fabrication de celui-ci ou fixé à sa surface extérieure lors d'une opération postérieure à la cuisson du pneumatique comme illustré à la figure 2. Le pneumatique 22 est présenté de façon très schématique. Il comporte une bande de roulement 24, deux flancs 26, deux bourrelets 28, une gomme intérieure 30 et est monté sur une roue 32. Un transpondeur 10 est fixé à la surface extérieure du flanc 26 au moyen d'un patch caoutchouteux 27.

Le transpondeur RFID UHF 10 présenté comporte une mémoire et un circuit de transmission des données stockées dans la mémoire vers un lecteur extérieur. Le transpondeur peut être actif mais est usuellement passif et reçoit des signaux RF d'une source extérieure qui lui transmettent notamment l'énergie nécessaire au déclenchement d'émissions multiples des données contenues dans la mémoire du transpondeur. Un numéro d'identification unique du pneumatique est attribué par le manufacturier du pneumatique soit pendant la fabrication soit ultérieurement. Ce numéro permet de suivre le pneumatique pendant toute sa vie. Ce numéro peut suivre le format recommandé « electronic product code » (EPC) ou avoir tout autre format.

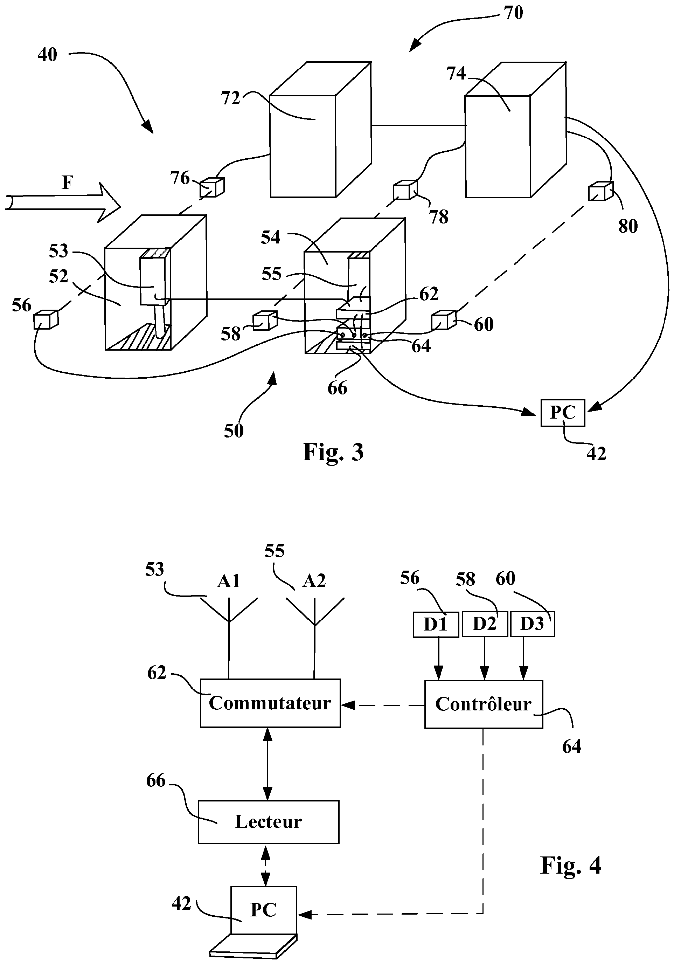

La figure 3 présente schématiquement un portique de lecture dynamique de données 40 selon un objet de l'invention. Ce portique 40 se compose de deux systèmes identiques 50 et 70 chacun disposé d'un côté d'une piste de roulage d'un véhicule. La flèche F indique le sens de roulage du véhicule. Chaque système tel qu'illustré comprend deux boitiers 52 et 54 d'un côté, 72 et 74 de l'autre et trois détecteurs de passage associés 56 et 76 (D1), 58 et 78 (D2), ainsi que 60 et 80 (D3). Le système 40 comporte aussi un ordinateur ou PC 42 destiné à recevoir et traiter les données.

Chaque boitier comporte une antenne 53, 55 pour émettre et recevoir des signaux RF à destination et en provenance des transpondeurs des pneumatiques du véhicule. Les boitiers sont réalisés en un matériau qui ne perturbe pas les signaux RF, tel du polypropylène. Les antennes sont directionnelles et leur direction de plus grande émission/réception est orientée vers le véhicule et normale à la direction de déplacement du véhicule.

Les boitiers 54 et 74 comportent en plus un commutateur pilotable 62, un contrôleur logique programmable 64 et un lecteur RFID UHF 66.

Dans le cas du système 50, voir figure 4, le lecteur 66 est apte à être couplé aux antennes 53 et 55 pour lire et mémoriser les données des transpondeurs ; c'est un lecteur interrogateur de RFID usuel du commerce ; le commutateur pilotable 62 est relié aux deux antennes 53 et 55, d'une part et au contrôleur logique programmable 64, d'autre part ; son rôle est d'assurer un couplage sélectif entre le lecteur 66 et chacune des antennes 53 et 55 ; la vitesse de commutation du commutateur 62 est inférieure à 50 μs, de l'ordre de 10 μs ; le contrôleur logique programmable 64 est relié au commutateur 62, d'une part et aux trois paires de détecteurs de passage des pneumatiques 56 et 76 (D1), 58 et 78 (D2), 60 et 80 (D3), d'autre part ; son rôle est de piloter le commutateur 62 en fonction des signaux de ces détecteurs de passage des pneumatiques 56 et 76 (D1), 58 et 78 (D2), 60 et 80 (D3). Le lecteur 66 ainsi que le contrôleur 64 sont aussi reliés à l'ordinateur ou PC 42 pour lui transmettre les données lues ainsi que la succession des événements notés par le contrôleur.

Chaque paire de détecteurs de passage est disposée sur la piste de roulage en amont ou en aval d'une antenne. Ces détecteurs peuvent être de tout type, par exemple avec des rayons optiques, laser, infra rouge, ... ; le passage d'un pneumatique est alors lié à la rupture du signal lumineux dans le cas d'un détecteur optique ou encore lié à la surpression due au passage du pneumatique dans le cas d'un détecteur de pression piézoélectrique. La distance, dans le sens de roulage du véhicule, entre la première paire de détecteurs D1 et l'axe de la première antenne est de l'ordre de la demi/longueur de lecture efficace de cette première antenne. La deuxième paire de détecteurs D2 est placé sensiblement au milieu des deux antennes. Enfin, la troisième paire de détecteurs est placé en aval de la deuxième antenne à une distance de l'ordre de la demi-distance de lecture efficace de la deuxième antenne. Comme cette longueur de lecture efficace de chaque antenne est de l'ordre d'un mètre, dans le système 40, les détecteurs sont disposés, dans le sens de roulage du véhicule, à environ 50 cm de part et d'autre de chaque antenne. Les détecteurs en amont de chacune des antennes servent à indiquer l'arrivée dans le champ de lecture de l'antenne en aval d'un pneumatique, la troisième paire de détecteurs sert à indiquer la fin du passage d'un pneumatique c'est-à-dire la sortie du système de lecture de ce pneumatique. La troisième paire de détecteurs peut aussi être remplacée par un dispositif d'arrêt au-delà d'un temps donné. Le temps de réponse des détecteurs de passage est de l'ordre d'une micro seconde.

La distance efficace de lecture d'une antenne est notamment fonction des types d'antennes, du paramétrage des lecteurs, des types de transpondeurs et de pneumatiques utilisés, elle dépend aussi de la vitesse de passage des véhicules. Cette distance peut être estimée expérimentalement et correspond à la distance pendant laquelle les conditions de lecture des données d'un transpondeur associé à un pneumatique sont robustes et fiables.

Les rayons des détecteurs optiques sont placés à une distance minimale du sol de roulage. De préférence cette distance est inférieure à 3 cm, de l'ordre de 1 à 2 cm. Cela permet de ne pas être perturbé par la carrosserie du véhicule.

Chaque antenne est placée à une distance comprise entre 0,80 et 1,20 mètre du flanc des pneumatiques des véhicules dont les transpondeurs doivent être lus lors du passage du véhicule. Chaque antenne est aussi placée verticalement de telle sorte que son centre soit au niveau de l'axe de rotation des pneumatiques des véhicules pour assurer de bonnes conditions de lecture lorsque les deux antennes du transpondeur et de l'antenne du système sont toutes les deux alignées verticalement.

Chaque antenne des boitiers 52, 54, 72, 74 est une antenne à polarisation linéaire avec un champ électrique vertical. Cela permet d'utiliser la puissance maximum de lecture lorsque les deux antennes du transpondeur et de l'antenne du système sont toutes les deux alignées verticalement ; cela permet aussi de minimiser les réverbérations des signaux ou ondes RF entre les antennes du système et des transpondeurs contre le sol.

L'application présentée comporte une exigence forte, celle de pouvoir lire les données des transpondeurs lorsque les véhicules passent le long du système à une vitesse maximale de l'ordre de 50 à 60 km/h. C'est-à-dire qu'en 1 ms, le véhicule parcourt une distance de 14 à 17 mm.

L'utilisation de détecteurs de passage avec un temps de réponse de l'ordre d'une $\mu$s et d'un commutateur pilotable de temps de commutation inférieur à 50 $\mu$s permet de lancer immédiatement la lecture de la première antenne puis de commuter très rapidement de la première à la seconde lorsque le deuxième détecteur indique l'arrivée du pneumatique devant cette seconde antenne. On n'est ainsi pas soumis aux variations de temps de réponse des différents lecteurs du commerce. De plus, ce système permet d'assurer que les deux antennes sont bien pilotées alternativement, ce qui garantit qu'il n'y a aucun risque d'interférences entre les mesures.

Le fonctionnement du portique selon l'un des objets de l'invention est le suivant :

Lorsqu'un véhicule se présente devant le portique 40 dans la direction indiquée par la flèche F, les pneumatiques avant vont faire se déclencher la première barrière de détecteurs D1, de références 56 et 76.

Ce déclenchement est transmis au contrôleur logique 64 qui active immédiatement le lecteur 66 et via le commutateur 62 les antennes A1 des boitiers 52 (référence 53) et 72 Ces antennes interrogent les transpondeurs des deux pneumatiques avant du véhicule et recueillent et mémorisent les données transmises par ces transpondeurs.

Lorsque les pneumatiques avant font se déclencher la deuxième barrière de détecteurs D2, de références 58 et 78, ce signal est transmis au contrôleur qui ordonne au commutateur 62 de commuter le lecteur 66 de premières antennes A1 (53) vers les deuxièmes antennes A2 des boitiers 54 (référence 55) et 74. Ces deuxièmes antennes interrogent les transpondeurs des deux pneumatiques avant du véhicule et recueillent et mémorisent les données transmises par ces transpondeurs.

La vitesse de commutation est telle (de l'ordre de 10 $\mu$s) que la lecture et l'enregistrement des données transmises par les transpondeurs est quasiment continue des premières antennes aux deuxièmes.

Puis le déclenchement de la troisième barrière de détecteurs D3 (de références 60 et 80) indique que les pneumatiques avant du véhicule sont sortis de la zone de lecture efficace des antennes du portique. Ce signal est transmis au contrôleur qui met en veille le lecteur 66.

Le lecteur 66 peut alors transmettre au PC 42 l'ensemble des données enregistrées pour validation et traitement.

Toutefois, lorsque l'empattement du véhicule est tel que les pneumatiques arrière du véhicule font se déclencher la première barrière de détecteurs D1 avant que les pneumatiques avant ne fassent se déclencher la troisième barrière de détecteurs D3, le contrôleur conserve l'affectation du lecteur 66 aux deuxièmes antennes A2 jusqu'au déclenchement effectif de la troisième barrière de détecteurs D3. Cela permet une lecture complète des pneumatiques avant du véhicule. Dès que la troisième barrière de détecteurs se déclenche, le contrôleur ordonne au commutateur 62 d'activer les premières antennes A1.

Il peut aussi arriver que les pneumatiques avant d'un deuxième véhicule fassent se déclencher la première barrière de détecteurs D1 avant que les pneumatiques arrière du premier véhicule n'aient entrainé le déclenchement de la troisième barrière de détecteurs D3. Dans ce cas, le contrôleur agit comme précédemment en conservant l'affectation du lecteur 66 aux deuxièmes antennes A2 jusqu'au déclenchement de la troisième barrière de détecteurs D3.

Pour faciliter l'affectation des données transmises par les transpondeurs, il est avantageux d'ajouter un transpondeur sur la carrosserie du véhicule, par exemple à proximité du pneumatique arrière. Les données de ce transpondeur peuvent aussi être lues par les antennes A1 et A2.

Un système tel que précédemment décrit a été réalisé. Ce système était constitué d'un lecteur Impinj, réglé sur un maximum de 30 dBm de puissance conduite, de deux antennes Intermec, linéaires, espacées de 1 m entre elles, orientées verticalement, de trois cellules infrarouges de détection Banner, avec émetteur et récepteur du côté opposé de la piste de roulage, deux disposées 50 cm avant leur antenne associée et la troisième 50 cm après la deuxième antenne, d'un commutateur pilotable Keon à quatre sorties (trois utilisées) et d'une carte électronique réalisée en laboratoire afin de piloter le commutateur constituée d'un microcontrôleur de marque PIC et d'entrées/sorties. Les pneumatiques testés étaient équipés de SpeedyPatch fournis par Patch Rubber et de transpondeurs RFID UHF commercialisés par Hanna.

Le portique et les systèmes de lecture dynamique de données de transpondeurs ont été décrits dans le cas particulier de véhicules de compétition, le portique est alors placé par exemple avant l'entrée du circuit de compétition ou en sortie des stands. Un tel portique peut être adapté à tous types de véhicules et de pneumatiques.

## Revendications

1. Système (50, 70) de lecture dynamique des données des transpondeurs (10) d'au moins deux pneumatiques (22) d'un véhicule, lesdits pneumatiques (22) étant disposés latéralement l'un par rapport à l'autre du même côté dudit véhicule, comprenant :

   - au moins deux antennes (53, 55) aptes à recevoir des données transmises par les transpondeurs (10) ;
   - un lecteur (66) apte à être couplé auxdites antennes (53, 55) pour lire et mémoriser les données des transpondeurs (10) ;et

   - un commutateur pilotable (62) placé entre lesdites antennes (53, 55) et ledit lecteur (66) pour assurer un couplage sélectif entre ledit lecteur (66) et chacune desdites antennes (53, 55) ;

   **caractérisé en ce que** chaque antenne (53, 55) ayant une distance efficace de lecture dans la direction de roulage dudit véhicule donné, l'écartement entre lesdites deux antennes est inférieur ou égal à la demi somme des distances efficaces de lecture desdites deux antennes (53, 55), **en ce que** chaque antenne (53, 55) est associée à un détecteur (56, 58) placé en amont de la zone de lecture efficace couverte par l'antenne (53, 55), ledit détecteur (56, 58) émettant un signal associé au passage d'un pneumatique **et en ce que** un contrôleur logique programmable (64) pilote le commutateur (62) en fonction des signaux desdits détecteurs (56, 58) de passage de roue.

2. Système (50, 70) de lecture selon la revendication précédente, dans lequel, le système (50, 70) ayant un sens de roulage (F) du véhicule, la première antenne (53) ayant une distance efficace de lecture dans la direction de roulage dudit véhicule donnée, un premier détecteur (56) est disposé en amont de la première antenne (53) à une distance de l'ordre de la moitié de la distance de lecture efficace de ladite première antenne (53).

3. Système (50, 70) de lecture selon l'une quelconque des revendications précédentes, dans lequel tout détecteur (58, 78) disposé le long de la voie de roulage du véhicule entre deux antennes est placé à égale distance desdites deux antennes (53, 55).

4. Système (50, 70) de lecture selon l'une quelconque des revendications précédentes, comprenant en plus un dispositif (60, 80) signalant la sortie d'un pneumatique de la zone de lecture du système (50, 70) de lecture.

5. Système (50, 70)de lecture selon la revendication 4, dans lequel ledit dispositif (60, 80) est un détecteur.

6. Système (50, 70) de lecture selon l'une des revendications 4 et5, dans lequel ledit dispositif (60, 80) est disposé en aval de la voie de roulage du véhicule à une distance de la dernière antenne (55) inférieure ou égale à la demi distance efficace de lecture de ladite dernière antenne (55).

7. Système(50, 70) de lecture selon l'une quelconque des revendications précédentes, dans lequel la vitesse de commutation du commutateur pilotable (62) est inférieure à 50 $\mu$s.

8. Système (50, 70) de lecture selon l'une des revendications précédentes, dans lequel lesdits détecteurs (56, 58, 60, 76, 78, 80) sont des barrières optiques.

**9.** Système (50, 70) de lecture selon la revendication 8 dans lequel les rayons desdites barrières optiques sont placés à une hauteur inférieure à trois centimètres du sol de roulage.

**10.** Système (50, 70) de lecture selon la revendication 9, dans lequel les rayons desdites barrières optiques sont placés à une hauteur comprise entre 1 et 2 centimètres du sol de roulage.

**11.** Système (50, 70) de lecture selon l'une quelconque des revendications précédentes, dans lequel le nombre d'antennes (53, 55) est inférieur à 5.

**12.** Système (50, 70) de lecture selon l'une quelconque des revendications précédentes, dans lequel, les antennes (12) des transpondeurs (10) des pneumatiques (22) étant à polarisation linéaire, lesdites antennes (53, 55) du système (50, 70) de lecture sont des antennes à polarisation linéaire avec un champ électrique vertical.

**13.** Système (50, 70) de lecture selon la revendication 12, dans lequel lesdites antennes (53, 55) ont un gain inférieur ou égal à 6 dBi.

**14.** Système (50, 70) de lecture selon la revendication 13, dans lequel lesdites antennes (53, 55) du système (50, 70) sont des antennes de gain inférieur ou égal à 6 dBi et la puissance conduite maximale à travers lesdites antennes (53, 55) est de 30 dBm.

**15.** Système (50, 70) de lecture selon l'une quelconque des revendications précédentes, comportant en plus une unité centrale (42) de traitement et mémorisation des données.

**16.** Système (50, 70) de lecture selon l'une quelconque des revendications précédentes, dans lequel le commutateur (62) active la lecture des données du transpondeur (10) d'un pneumatique (22) par une antenne (53, 55) donnée lors du déclenchement d'un signal indiquant l'entrée dudit pneumatique (22) dans la zone de lecture efficace de ladite antenne (53, 55).

**17.** Système (50, 70) selon la revendication 16, dans lequel, lorsque la deuxième antenne (55) est activée par le commutateur (62) pour lire les données du transpondeur (10) d'un premier pneumatique (22) lors du déclenchement d'un signal indiquant l'entrée d'un nouveau pneumatique (22) dans la zone de lecture efficace de la première antenne (53) du système (50, 70), le commutateur (62) garde la deuxième antenne (55) activée jusqu'au déclenchement d'un signal indiquant la sortie dudit premier pneumatique (22) de la zone de lecture efficace de ladite deuxième antenne (55).

**18.** Portique (40) de lecture dynamique de données de transpondeurs de pneumatiques de véhicules disposé le long d'une voie de roulage desdits véhicules, **caractérisé en ce qu'**il comporte de part et d'autre de ladite voie de roulage un système (50, 70) de lecture selon l'une quelconque des revendications précédentes.

**Patentansprüche**

**1.** System (50, 70) zum dynamischen Lesen der Daten der Transponder (10) von mindestens zwei Luftreifen (22) eines Fahrzeugs, wobei die Luftreifen (22) auf der gleichen Seite des Fahrzeugs seitlich zueinander angeordnet sind, das enthält:

- mindestens zwei Antennen (53, 55), die geeignet sind, von den Transpondern (10) übertragene Daten zu empfangen;
- ein Lesegerät (66), das geeignet ist, mit den Antennen (53, 55) gekoppelt zu werden, um die Daten der Transponder (10) zu lesen und zu speichern; und
- einen zwischen den Antennen (53, 55) und dem Lesegerät (66) angeordneten steuerbaren Schalter (62), um eine selektive Kopplung zwischen dem Lesegerät (66) und jeder der Antennen (53, 55) zu gewährleisten;

**dadurch gekennzeichnet, dass**, da jede Antenne (53, 55) einen effektiven Leseabstand in der Fahrrichtung des gegebenen Fahrzeugs hat, der Zwischenraum zwischen den zwei Antennen geringer als die oder gleich der halben Summe der effektiven Leseabstände der zwei Antennen (53, 55) ist, dass jede Antenne (53, 55) einem Detektor (56, 58) zugeordnet ist, der stromaufwärts vor dem von der Antenne (53, 55) abgedeckten effektiven Lesebereich platziert ist, wobei der Detektor (56, 58) ein dem Durchlauf eines Luftreifens zugeordnetes Signal sendet, und dass ein programmierbarer logischer Controller (64) den Schalter (62) abhängig von den Signalen der Raddurchlauf-Detektoren (56, 58) steuert.

**2.** Lesesystem (50, 70) nach dem vorhergehenden Anspruch, wobei das System (50, 70) eine Fahrrichtung (F) des Fahrzeugs hat, wobei die erste Antenne (53) einen effektiven Leseabstand in der Fahrrichtung des gegebenen Fahrzeugs hat, ein erster Detektor (56) stromaufwärts vor der ersten Antenne (53) in einem Abstand in der Größenordnung der Hälfte des effektiven Leseabstands der ersten Antenne (53) angeordnet ist.

3. Lesesystem (50, 70) nach einem der vorhergehenden Ansprüche, wobei jeder entlang des Fahrwegs des Fahrzeugs zwischen zwei Antennen angeordnete Detektor (58, 78) in gleichem Abstand zu den zwei Antennen (53, 55) platziert ist.

4. Lesesystem (50, 70) nach einem der vorhergehenden Ansprüche, das außerdem eine Vorrichtung (60, 80) enthält, die den Austritt eines Luftreifens aus dem Lesebereich des Lesesystems (50, 70) anzeigt.

5. Lesesystem (50, 70) nach Anspruch 4, wobei die Vorrichtung (60, 80) ein Detektor ist.

6. Lesesystem (50, 70) nach einem der Ansprüche 4 und 5, wobei die Vorrichtung (60, 80) stromabwärts hinter dem Fahrweg des Fahrzeugs in einem Abstand zur letzten Antenne (55) geringer als der oder gleich dem halben effektiven Leseabstand der letzten Antenne (55) angeordnet ist.

7. Lesesystem (50, 70) nach einem der vorhergehenden Ansprüche, wobei die Schaltgeschwindigkeit des steuerbaren Schalters (62) geringer als 50 μs ist.

8. Lesesystem (50, 70) nach einem der vorhergehenden Ansprüche, wobei die Detektoren (56, 58, 60, 76, 78, 80) Lichtschranken sind.

9. Lesesystem (50, 70) nach Anspruch 8, wobei die Strahlen der Lichtschranken in einer Höhe geringer als drei Zentimeter über dem Fahrboden platziert sind.

10. Lesesystem (50, 70) nach Anspruch 9, wobei die Strahlen der Lichtschranken in einer Höhe zwischen 1 und 2 Zentimeter über dem Fahrboden platziert sind.

11. Lesesystem (50, 70) nach einem der vorhergehenden Ansprüche, wobei die Anzahl von Antennen (53, 55) niedriger als 5 ist.

12. Lesesystem (50, 70) nach einem der vorhergehenden Ansprüche, wobei, da die Antennen (12) der Transponder (10) der Luftreifen (22) eine lineare Polarisation aufweisen, die Antennen (53, 55) des Lesesystems (50, 70) Antennen mit linearer Polarisation mit einem senkrechten elektrischen Feld sind.

13. Lesesystem (50, 70) nach Anspruch 12, wobei die Antennen (53, 55) einen Gewinn von weniger als oder gleich 6 dBi haben.

14. Lesesystem (50, 70) nach Anspruch 13, wobei die Antennen (53, 55) des Systems (50, 70) Antennen mit einem Gewinn niedriger als oder gleich 6 dBi sind, und die maximale über die Antennen (53, 55) geführte Leistung 30 dBm beträgt.

15. Lesesystem (50, 70) nach einem der vorhergehenden Ansprüche, das zusätzlich eine zentrale Verarbeitungsund Speichereinheit (42) der Daten aufweist.

16. Lesesystem (50, 70) nach einem der vorhergehenden Ansprüche, wobei der Schalter (62) das Lesen der Daten des Transponders (10) eines Luftreifens (22) durch eine gegebene Antenne (53, 55) beim Auslösen eines Signals aktiviert, das den Eintritt des Luftreifens (22) in den effektiven Lesebereich der Antenne (53, 55) anzeigt.

17. System (50, 70) nach Anspruch 16, wobei, wenn die zweite Antenne (55) vom Schalter (62) aktiviert wird, um die Daten des Transponders (10) eines ersten Luftreifens (22) beim Auslösen eines Signals zu lesen, das den Eintritt eines neuen Luftreifens (22) in den effektiven Lesebereich der ersten Antenne (53) des Systems (50, 70) anzeigt, der Schalter (62) die zweite Antenne (55) bis zum Auslösen eines Signals aktiviert hält, das den Austritt des ersten Luftreifens (22) aus dem effektiven Lesebereich der zweiten Antenne (55) anzeigt.

18. Portalrahmen (40) zum dynamischen Lesen von Transponderdaten von Luftreifen von Fahrzeugen, der entlang eines Fahrwegs der Fahrzeuge angeordnet ist, **dadurch gekennzeichnet, dass** er zu beiden Seiten des Fahrwegs ein Lesesystem (50, 70) nach einem der vorhergehenden Ansprüche aufweist.

**Claims**

1. System (50, 70) for the dynamic reading of the data from the transponders of at least two tyres (22) of a vehicle, said tyres (22) being disposed laterally from each other on the same side of said vehicle, including:

   - at least two antennas (53, 55) capable of receiving data transmitted by the transponders (10);
   - a reader (66) capable of being coupled to said antennas (53, 55) to read and store the data from the transponders (10);and
   - a controllable switch (62) positioned between said antennas (53, 55) and said reader to provide a selective coupling between said reader (66) and each of said antennas (53, 55) and;

   **characterized in that** each antenna (53, 55) having an effective reading distance in the direction of travel of said vehicle, the spacing between said two antennas is preferably equal to or less than half the sum of the effective reading distances of said two antennas(53, 55), **in that** each antenna (53, 55) is associated with a sensor (56, 58) positioned upstream of the effective reading area covered by the antenna (53, 55), said sensor ( 56, 58) emitting a signal associated with the passage of a tyre; **and in that** a programmable logic controller (64) which controls the switch (62) as a function of the signals of said tyre passage sensors (56, 58).

2. Reading system (50, 70) according to the preceding claim, in which, the system (50, 70) having a direction (F) of travel of the vehicle, the first antenna (53) having an effective reading distance in the direction of travel of said given vehicle, a first sensor (56) is disposed upstream of the first antenna (53) at a distance in the region of half the effective reading distance of said first antenna (53).

3. Reading system (50, 70) according to any one of the preceding claims, in which any sensor (58, 78) disposed along the travel path of the vehicle between two antennas is positioned equidistantly from said two antennas (53, 55).

4. Reading system (50, 70) according to any one of the preceding claims, furthermore including a device (60, 80) signalling the exit of a tyre from the reading area of the reading system (50, 70).

5. Reading system (50, 70) according to Claim 4, in which said device (60, 80) is a sensor.

6. Reading system (50, 70) according to one of claims 4 and 5, in which said device (60, 80) is disposed downstream of the travel path of the vehicle at a distance from the last antenna (55) equal to or less than half the effective reading distance of the final antenna (55).

7. Reading system (50, 70) according to any one of the preceding claims, in which the switching speed of the controllable switch (62) is less than 50 μs.

8. Reading system (50, 70) according to one of the preceding claims, in which said sensors (56, 58, 60, 76, 78, 80) are optical barriers.

9. Reading system (50, 70) according to Claim 8, in which the beams of said optical barriers are positioned at a height of less than three centimetres from the travel ground.

10. Reading system (50, 70) according to Claim 9, in which the beams of said optical barriers are positioned at a height of between 1 and 2 centimetres from the travel ground.

11. Reading system (50, 70) according to any one of the preceding claims, in which the number of antennas (53, 55) is less than 5.

12. Reading system (50, 70) as claimed in one of the preceding claims, in which, the tyre (22) transponder (10) antennas (12) having linear polarisation, said reading system (50, 70) antennas (53, 55) are linear polarisation antennas with a vertical electrical field.

13. Reading system (50, 70) according to Claim 12, in which said antennas (53, 55) have a gain equal to or less than 6 dBi.

14. Reading system (50, 70) according to Claim 13, in which said system antennas (53, 55) are antennas with a gain equal to or less than 6 dBi and the maximum conducted power through said antennas (53, 55) is 30 dBm.

15. Reading system (50, 70) according to any one of the preceding claims, also comprising a central data processing and storage unit (42).

16. Reading system (50, 70) according to any one of the preceding claims, in which the switch (62) activates the reading of the data from the transponder (10) of a tyre (22) by a given antenna (53, 55) when a signal is triggered indicating the entry of said tyre (22) into the effective reading area of said antenna (53, 55).

17. Reading system (50, 70) according to Claim 16, in which, when the second antenna (55) is activated by the switch (62) in order to read the data from the transponder (10) of a first tyre (22), when a signal is triggered indicating the entry of a new tyre (22) into the effective reading area of the first antenna (53) of the system (50, 70), the switch (62) keeps the second antenna (55) activated until a signal is triggered indicating the exit of said first tyre (22) from the effective reading area of said second antenna (55).

18. Portal (40) for the dynamic reading of data from transponders of vehicle tyres, disposed along a travel path of said vehicles, **characterized in that** it comprises a reading system (50, 70) according to any one of the preceding claims on either side of said travel path.

**Fig. 1**

**Fig. 2**

**Fig. 3**

**Fig. 4**

**EP 3 074 916 B1**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 2202099 A1